# EUROPEAN PATENT SPECIFICATION

(11) **EP 4 571 486 B1**
(45) Date of publication and mention of the grant of the patent: **25.11.2026**
(21) Application number: 24219224.3
(22) Date of filing: 11.12.2024
(51) Int. Cl.: G06F 3/16, G10L 17/00, G10L 17/22, B60K 35/10, G10L 15/22, B60K 35/00, G10L 99/00

(54) **VOICE-CONTROLLED HAPTIC INTERFACE**
SPRACHGESTEUERTE HAPTISCHE SCHNITTSTELLE
INTERFACE HAPTIQUE À COMMANDE VOCALE

(30) Priority: 12.12.2023 US 202363609210 P; 09.12.2024 US 202418974461
(43) Date of publication of application: 18.06.2025
(73) Proprietor: Analog Devices International Unlimited Company, Limerick (IE)
(72) Inventor: KATZ, David, Wilmington, 01887 (US); RUWISCH, Dietmar, Limerick (IE); KIM, Andrew, Wilmington, 01887 (US)
(74) Representative: Horler, Philip John

(56) References cited:
- US-A1- 2009 055 178
- US-A1- 2018 357 040
- SALEEM SHIRIN ET AL: "How Alexas new Live Translation for conversation works", 14 December 2020 (2020-12-14), pages 1 - 8, XP093237144, Retrieved from the Internet <URL:https://www.amazon.science/blog/how-alexas-new-live-translation-for-conversations-works> [retrieved on 20250108]

## Description

### CROSS-REFERENCE TO RELATED APPLICATIONS

The present Application for Patent claims priority to U.S. Non-provisional Application No. 18/974,461, entitled, "VOICE-CONTROLLED HAPTIC INTERFACE" filed December 9, 2024, which claims priority to U.S. Provisional Application No. 63/609,210, entitled "VOICE-DEFINED USER INTERFACE" filed December 12, 2023.

### TECHNICAL FIELD

Aspects of the present disclosure relate generally to user interfaces, and more particularly to interfaces used to control other systems.

### BACKGROUND

As in-cabin features of vehicles become more complex and interior controls become more minimalist, there has been a trend toward using touchscreens to control many aspects of the vehicle. The touchscreens provide a human machine interface (HMI) to allow configuring various settings or controls of the vehicle (e.g., in real time), including heating, ventilation, and air conditioning (HVAC), mirror control, seat control, window or sunroof control, cruise control, performance settings, multimedia access, and configuration of various other car systems. However, there is a growing pushback against these touch-only systems due to several factors, such as complex menu trees leading to confusing menu navigation, inconvenience and user frustration, delays in fulfilling occupant's intent, "eyes off road" situations when navigating the complex menu trees, compromising safety in the name of minimalist aesthetic design, etc. Voice recognition can be used to speak commands to be performed by a vehicle to improve functional safety, but is not always accurate or reliable.

US2018/357040A1 describes an infotainment system for a vehicle. The system includes a plurality of touch sensitive displays, a speaker system, at least one physical input control, a plurality of microphones, a gesture input system, a head and eye tracking system and a computing system. The various input systems are used to interact with the infotainment system. The system provides feedback to vehicle occupants using the displays and audio information.

US2009/055178A1 describes a system for controlling personalized settings in a vehicle. The system includes a microphone for receiving spoken commands from a person in the vehicle, a location recognizer for identifying location of the speaker, and an identity recognizer for identifying the identity of the speaker. The system also includes a speech recognizer for recognizing the received spoken commands. The system further includes a controller for processing the identified location, identity and commands of the speaker. The controller controls one or more feature settings based on the identified location, identified identity and recognized spoken commands of the speaker. The system also optimizes the grammar comparison for speech recognition and the beamforming microphone array used in the vehicle.

### SUMMARY

The following presents a simplified summary of one or more aspects to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects in a simplified form as a prelude to the more detailed description that is presented later.

In some aspects, the techniques described herein relate to a method, including executing speech recognition on voice signals received by a microphone(s), and, after a speech recognition event, assigning certain functions to a haptic control unit to execute certain actions as aligned with speech recognition results.

In another aspect, a Voice-Controlled Haptic Interface (VCHI) for a machine control (MC) system is provided that includes one or more memories, and one or more processors communicatively coupled with the one or more memories. The one or more processors are, individually or in combination, configured to execute the instructions to cause the VCHI to: receive, from a voice recognition system, an indication of a requested MC operation determined based on processing, using speech recognition, one or more voice commands received via one or more microphones; identify a user associated with the one or more voice commands or detect a direction of arrival of the one or more voice commands; select, based on the identified user or the detected direction of arrival of the one or more voice commands, a privilege level; determine, based on the selected privilege level, whether to allow control of one or more control functions associated with the MC operation via one or more haptic control devices; and assign, via the MC and based on whether control of the one or more control functions associated with the requested MC operation via the one or more haptic control devices is allowed for the selected privilege level, the one or more control functions to the one or more haptic control devices.

In another aspect, a method for assigning one or more control functions to one or more haptic control devices is provided that includes: receiving, from a voice recognition system, an indication of a requested MC operation determined based on processing, using speech recognition, one or more voice commands received via one or more microphones; and identifying a user associated with the one or more voice commands or detecting a direction of arrival of the one or more voice commands; selecting, based on the identified user or the detected direction of arrival of the one or more voice commands, a privilege level; determining, based on the selected privilege level, whether to allow control of one or more control functions associated with the MC operation via one or more haptic control devices; and assigning, via a MC system and based on whether control of the one or more control functions associated with the requested MC operation via the one or more haptic control devices is allowed for the selected privilege level, the one or more control functions to the one or more haptic control devices.

In another aspect, one or more computer-readable media having instructions stored thereon are provided where the instructions are executable by one or more processors for assigning one or more control functions to one or more haptic control devices according to the method set out above.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which.
**FIG. 1** illustrates an example of a vehicle cabin that can utilize a voice-controlled haptic interface (VCHI), in accordance with aspects described herein.
**FIG. 2** illustrates an example of a voice processing unit, in accordance with aspects described herein.
**FIG. 3** illustrates an example of a method for assigning human machine interface (HMI) operations to a haptic control device, in accordance with aspects described herein.
**FIG. 4** illustrates an example of a method for assigning HMI operations to a haptic control device based on voice direction or person identification, in accordance with aspects described herein.
**FIG. 5** is a diagram of an example of a computing environment, in accordance with aspects described herein.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

Aspects described herein relate to a Voice-Controlled Haptic Interface (VCHI) for operating a machine control (MC) system, which may include a human machine interface (HMI). The VCHI can be used to assign a function to a haptic control device based on a received voice command. For example, speech recognition can be performed to determine a requested MC operation, and the VCHI can assign a corresponding MC function to the haptic control device based on the requested MC operation. For example, the MC can include, or can otherwise communicate with or be communicatively coupled with, one or more microphones for receiving one or more voice commands (e.g., as spoken by a user), a voice recognition system for processing the one or more voice commands to determine the requested MC operation, and/or one or more haptic control devices to which to assign one or more functions based on the requested MC operation. For example, the one or more haptic control devices can include a knob, button or collection of buttons, display, etc. to which the one or more functions can be assigned, such to control the requested MC operation.

The VCHI can accordingly provide a single highly tactile control, in the form of a haptic control device, per one or more vehicle occupants that can reduce or replace the need for touchscreen navigation, while simultaneously maintaining aesthetic minimalist quality and providing a satisfying, intuitive control interface for each user. The VCHI can also draw on voice understanding technology (e.g., a Spoken Language Understanding (SLU) system) and/or Acoustic Echo Cancellation/Noise Reduction/Beamforming (AEC/NR/BF) expertise for microphone signaling to enhance performance and robustness of the overall system. In some examples, aspects described herein can allow for identifying an occupant requesting an operation and determine whether that occupant has privileges to perform the desired action, or otherwise assigning a corresponding function to a haptic control device associated with the occupant. Aspects described herein, in some examples, can also be extended to applications outside of Automotive, e.g., in the Industrial or Consumer domain.

The problem of drivers needing to keep their eyes and minds on the road, while simultaneously controlling the vehicle that they are driving, is becoming increasingly prevalent as the user-accessible feature set of cars in general is growing in complexity. Aspects described herein provide the VCHI that can combine voice input and localization with a user interface that can be manipulated to control a multitude of in-cabin subsystems without taking eyes off the road. Total functional safety can be achieved by using voice recognition to determine the function of an haptic interface, which then executes the desired action, as described in some examples herein.

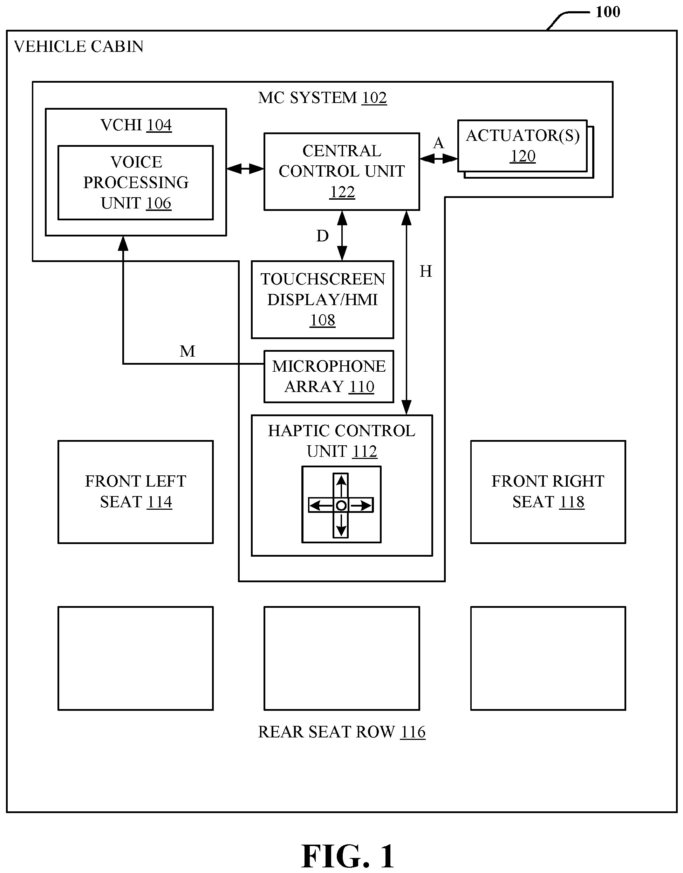

**FIG. 1** illustrates an example of a vehicle cabin 100 that can utilize the VCHI 104, in accordance with aspects described herein. The vehicle cabin 100 can include multiple seats for driver and passenger, such as front left seat 114, rear seat row 116, front right seat 118, etc. For example, vehicle cabin 100 can be equipped with an MC system 102 for controlling various functions of the vehicle cabin 100 or the vehicle itself. For example, the MC system 102 can control a heating, ventilation, and air conditioning (HVAC), system, a seat position, steering wheel position, a mirror position, cruise control, drivetrain performance, multimedia access, navigation, etc. In an example, MC system 102 can control some functions using one or more actuators 120 to affect change in a mechanical component of the vehicle cabin 100 or vehicle itself, or can control functions of the MC system 102 itself through software modification. The MC system 102 can include a central control unit 122 to modify the vehicle settings by communicating with the actuator(s) 120 or otherwise the software of the MC system 102 itself.

In an example, the MC system 102 can also include a display, such as a touchscreen display/HMI 108, for displaying information related to operation of the MC system 102, and allowing a user (e.g., vehicle occupant) to interact with the MC system 102 to control functions of the vehicle cabin 100 or the vehicle itself. For example, the touchscreen display/HMI 108 can display information regarding current settings that can be modified by interacting with the touchscreen display/HMI 108, such as HVAC settings, multimedia settings such as audio for playing, pausing, skipping tracks, adjusting volume, etc. The touchscreen display/HMI 108 can also provide menu options for modifying settings of the MC system 102 itself or of other functions inside the vehicle cabin 100, as described above. The MC system 102 may also include a haptic control unit 112 that can be a tactile feedback device including a knob having a rotatable outer surface, a knob affixed on an axial bearing that can move in various directions with pressure applied, touchpad, and/or the like.

The menus of the MC system 102 can be nested, and navigating the menus via touching the touchscreen display/HMI 108 or using the haptic control unit 112 to navigate the display can be cumbersome and can distract the driver from operating the vehicle. As such, aspects described herein relate to a VCHI 104 that can be used to process speech to modify a function of an MC operation being controlled by the haptic control unit 112. For example, the MC system 102 can also include a microphone array 110 for receiving voice commands from one or more vehicle occupants (e.g., occupants positioned in the front left seat 114, rear seat row 116, and/or right front seat 118), and the VCHI 104 can process the voice commands to determine an MC operation or associated function being requested, a position from which the voice command is received, a person identified as speaking the voice command, and/or the like. The MC operation or associated function can be a function supported by the MC system 102 (e.g., a function available by interacting with the touchscreen display/HMI 108 of the MC system 102). In another example, the MC operation can relate to navigating the menu of options in the MC system 102, such that the voice command may request a menu, and the haptic control unit 112 can be assigned the function of navigating the requested menu, as shown on the touchscreen display/HMI 108.

Instead of requiring navigating the menus of the MC system 102 to arrive at the MC operation or associated function, however, the VCHI 104 can determine the requested MC operation or associated function via the voice command, and can assign the function to the haptic control unit 112 so the haptic control unit 112 can be used to operate the function (e.g., to change a setting associated with the MC operation). For example, the requested MC operation can relate to changing a setting, such as HVAC control. In this example, the VCHI 104 can cause the central control unit 122 to assign HVAC control function to the haptic control unit 112, such that the user (e.g., vehicle occupant) can, after requesting the MC operation via voice command, use the haptic control unit 112 to control the HVAC system of the vehicle cabin 100. For example, the haptic control unit 112 can receive commands from use by the user, such as rotating of a knob or outer surface of the knob, rocking of a knob mounted on an axial bearing, swipes on a touchpad, etc., and can accordingly control the HVAC system based on the commands received on the haptic control unit 112.

In one example, the MC operation or function assigned to the haptic control unit 112 can be displayed on the touchscreen display/HMI 108. In this example, central control unit 122 can, based on the MC operation or function specified by the VCHI 104, display an indicator associated with the MC operation or function to notify (e.g., the vehicle occupant) via display of the MC operation or function assigned to be modified by the haptic control unit 112. In another example, the haptic control unit 112 may include a display that the central control unit 122 can operate to display the indicator associated with the MC operation or function. In any case, display of an indicator in this regard can allow the vehicle occupant to verify that the requested MC operation or function is the one intended by the voice command to prevent modifying an unintended function of the vehicle cabin 100 or vehicle itself. In addition, displaying the indicator may prevent an extra confirmation typically associated with voice commands, as the vehicle occupant can verify the requested MC operation on the display rather than necessarily receiving a confirmation request from the MC system 102.

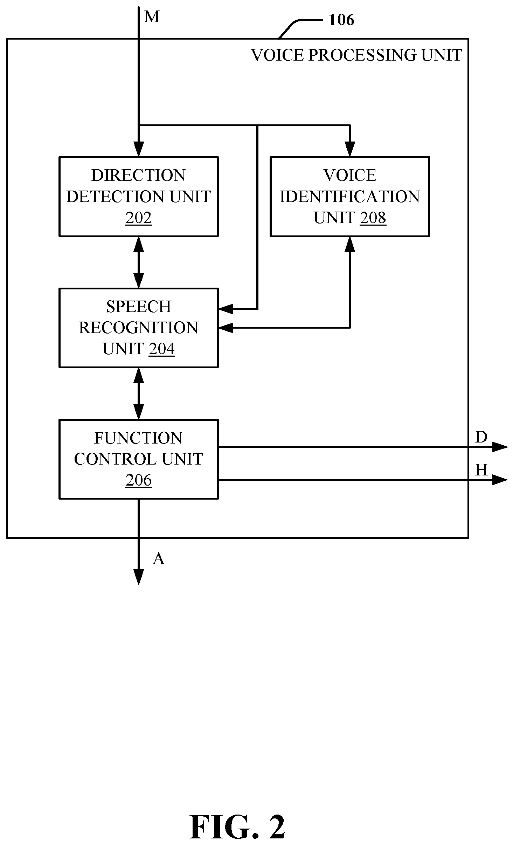

The VCHI 104 can include a voice processing unit 106 for performing speech recognition, direction detection, person identification, and/or the like, for voice commands received via the microphone array 110. FIG. 2 illustrates an example of a voice processing unit 106, in accordance with aspects described herein. For example, voice processing unit 106 can include one or more of a direction detection unit 202 for detecting a direction from which the voice command is received, a speech recognition unit 204 for performing speech recognition of a received voice command, a function control unit 206 for controlling one or more functions of the MC system 102 (e.g., via central control unit 206, and/or a voice identification unit 208 for identifying a person that spoke a received voice command.

In an example, voice processing unit 106 can receive a voice command (signal M) from the microphone array 110, and speech recognition unit 204 can process the voice command to determine a requested MC operation or associated function. For example, speech recognition unit 204 can indicate the requested MC operation to the function control unit 206. In one example, the function control unit 206 can communicate with the touchscreen display/HMI 108 or haptic control unit 112 (signal D), e.g., via the central control unit 122, to modify the associated display to display an indicator of the MC operation. In another example, the function control unit 206 can communicate with the haptic control unit 112 (signal H), e.g., via the central control unit 122, to assign the MC operation or associated function to the haptic control unit 112 to allow operation thereof (e.g., setting modification) via the haptic control unit 112. In another example, the function control unit 206 can communicate with the one or more actuators 120 (signal A), e.g., via the central control unit 122, to modify an actuator setting.

In another example, direction detection unit 202 can detect a direction from which the voice command is received via beamforming the voice command (signal M) received at multiple microphones in the microphone array 110 or using other direction or arrival detection technologies. In this example, direction detection unit 202 can determine a zone from which the voice command is received, such as the front left seat 114, the rear seat row 116, or the front right seat 118. Speech recognition unit 204 can provide this information to the function control unit 206. In an example, the function control unit 206 can use the information to determine whether the requested MC operation or associated function is permitted for an occupant in the zone. For example, some MC operations may only be accessible for the driver of the vehicle, and such MC operations requested from other zones may be denied such that function control unit 206 does not communicate with the touchscreen display/HMI 108 or haptic control unit 112 based on receiving the voice command. In another example, the MC system 102 may include multiple haptic control units 112 for multiple vehicle occupants. In this example, the function control unit can use the direction/zone information to determine which haptic control unit 112 to modify to perform the MC operation or associated function. For example, if the vehicle occupant in the front right seat 118 speaks a voice command to control seat position, function control unit 206 can communicate with the haptic control unit 112 for the front right seat 118 occupant so that haptic control unit 112 can be used to perform the MC operation or associated function to control the seat position of the front right seat 118.

In another example, voice identification unit 208 can detect a specific person from which the voice command is received via biometric detection of the voice command (signal M) received at the microphone array 110. In this example, voice identification unit 208 can provide this information to the function control unit 206. In an example, the function control unit 206 can use the information to determine whether the requested MC operation or associated function is permitted for the specific person requesting the MC operation or associated function. For example, some MC operations may only be accessible for a person assigned as the owner or primary driver, or otherwise detected as the driver based on a key used to access the vehicle or other indication of the person that is the driver, and such MC operations requested from other zones may be denied such that function control unit 206 does not communicate with the touchscreen display/HMI 108 or haptic control unit 112 based on receiving the voice command. In another example, the MC system 102 may include multiple haptic control units 112 for multiple vehicle occupants. In this example, the function control unit can use the identified person to determine which haptic control unit 112 to modify to perform the MC operation or associated function. For example, if the person identified from the voice command was previously indicated as the driver, function control unit 206 can communicate with the haptic control unit 112 for the haptic control unit 112 associated with a driver position, so the haptic control unit 112 can be used to perform the MC operation or associated function.

In examples described herein, a MC system, HMI, and/or associated methods can be provided that include one or more haptic control unit(s) (e.g., button(s), joysticks, trac-balls, touchpads, knobs, and/or touch screen, etc.), one or more microphone unit(s), one or more voice processing unit(s) capable of speech recognition, optional feedback unit(s) (e.g., including display(s), haptic feedback, voice feedback, or other modalities), etc. In some examples, the system and/or methods may be characterized by executing speech recognition on voice signals received by the microphone(s), and, after a speech recognition event, assigning certain functions to the haptic control unit to execute certain actions as aligned with speech recognition results.

In some examples, the human-machine interface system or methods described herein may also be characterized by after a speech recognition event, adjusting content on a feedback unit in response to speech recognition and assigning certain functions to the haptic control unit to execute certain actions as selectable by the feedback device.

In some examples, the MC system or methods described herein may also be characterized by voice processing on audio signals from at least two microphones for direction-of-arrival detection and/or microphone-beamforming on audio signals, and after a speech recognition event, adjusting content on the display in a display area that is assigned to a detected direction of arrival of voice signals (e.g., in a vehicle show on the passenger side of the display the air conditioning (AC) settings for the passenger seat after a command like "show (my) AC settings" was recognized to be spoken from the passenger seat), assigning certain, optionally direction-specific, functions of the haptic control unit to said display area (in above example, controlling passenger side AC settings with the haptic control unit), differentiating privileges of control function for different directions, e.g. in a vehicle, certain control functions can only be reached with a spoken command from the driver seat (e.g., "adjust wiper speed"), and/or attenuating audio signals including voice signals from other directions in the audio signal being processed by speech recognition on voice signals that arrive from a certain direction (e.g., in a vehicle, voice from passenger seat(s) is removed in the audio signal for driver seat speech recognition).

In some examples, the human-machine interface system or methods described herein may also be characterized by a voice processing unit capable of biometric voice identification, and after a speech recognition event, identify the voice of a speaking individual that was previously identified and assigned with a personalized user profile, adjusting content on the display in alignment with said user profile (e.g. for media playback control, display a personalized playlist upon recognition of a command like "show (my) playlist").

In some examples, the human-machine interface system or methods described herein may also be characterized by a speech recognition system where the assignment of control functions is defined in one or more language(s), whereas for speech recognition languages are supported that may be different from the language(s) in which the assignment of control functions was defined.

For example, based on the speech recognition event, the haptic control unit 112 can operate in a certain mode and/or perform a certain function. This may include haptic control unit 112 displaying an image indicative of the mode or function, interpreting input from interaction with the haptic control unit 112 based on the mode or function, etc. For example, if the speech recognition event recognizes a phrase related to music, the haptic control unit 112 may modify a displayed interface to include a picture or icon, or selectable features related to controlling music (e.g., a play/pause, next, or previous song button), and/or can modify an interactive element (e.g., a dial) to control a feature related to music (e.g., the volume). In another example, if the speech recognition event recognizes a phrase related to HVAC controls, the haptic control unit 112 may modify a displayed interface to include a picture or icon, or selectable features related to controlling HVAC (e.g., an HVAC mode button, such as A/C, heat, defrost, etc., or a fan speed button), and/or can modify an interactive element (e.g., a dial) to control a feature related to HVAC (e.g., automatic temperature and/or fan speed). In another example, if the speech recognition event recognizes a phrase related to cruise control, the haptic control unit 112 may modify a displayed interface to include a picture or icon, or selectable features related to controlling cruise control (e.g., set, resume, or cancel button, a button to increase or decrease speed, a button to enable or disable adaptive cruise control, etc.), and/or can modify an interactive element (e.g., a dial) to control a feature related to cruise control (e.g., cruise control speed, etc.).

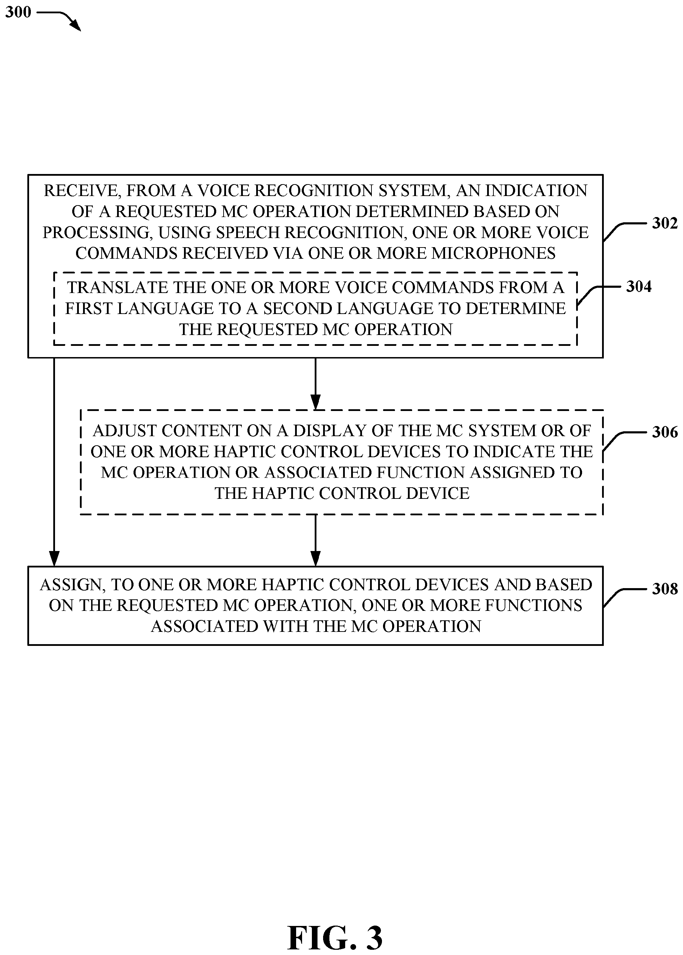

**FIG. 3** illustrates an example of a method 300 for assigning MC operations to a haptic control device, in accordance with aspects described herein. For example, method 300 can be performed by the VCHI 104, associated MC system 102, or corresponding components, as described in FIGs. 1 and 2.

In method 300, at action 302, an indication of a requested MC operation determined based on processing, using speech recognition, one or more voice commands received via one or more microphones can be received from a voice recognition system. In an aspect, VCHI 104, e.g., in accordance with voice processing unit 106, speech recognition unit 204, one or more associated processors and/or memories, etc., can receive, from the voice recognition system (e.g., voice processing unit 106), the indication of the requested MC operation determined based on processing, using speech recognition (e.g., by speech recognition unit 204), one or more voice commands received via one or more microphones (e.g., in microphone array 110). For example, the requested MC operation can include an MC operation supported by the MC system, for which a function can be performed (e.g., a setting can be modified) using a haptic control unit.

In one example, in receiving the indication of the requested MC operation at action 302, optionally at action 304, the one or more voice commands can be translated from a first language to a second language to determine the requested MC operation. In an aspect, VCHI 104, e.g., in accordance with voice processing unit 106, speech recognition unit 204, one or more associated processors and/or memories, etc., can translate the one or more voice commands from a first language to a second language to determine the requested MC operation. In this regard, for example, the VCHI can support processing of voice commands in multiple languages by translating the voice command to a language used by the MC to define the MC operations.

In method 300, optionally at action 306, content on a display of the MC system or one or more of the haptic control devices can be adjusted to indicate the MC operation or associated function assigned to the haptic control device. In an aspect, VCHI 104, e.g., in accordance with central control unit 122, touchscreen display/HMI 108, haptic control unit 112, one or more associated processors and/or memories, etc., can adjust content on a display of the MC system (e.g., touchscreen display/HMI 108) or of one or more haptic control devices (e.g., haptic control unit 112) to indicate the MC operation or associated function assigned to the haptic control device. This can allow the vehicle occupant to verify that the requested MC operation is assigned to the haptic control unit 112 before using the haptic control unit 112 to perform the associated function.

In method 300, at action 308, one or more functions associated with the MC operation can be assigned to the one or more haptic control devices based on the requested MC operation. In an aspect, VCHI 104, e.g., in accordance with central control unit 122, haptic control unit 112, one or more associated processors and/or memories, etc., can assign, to the one or more haptic control devices (e.g., haptic control unit 112) and based on the requested MC operation (e.g., determined based on speech recognition processing), the one or more functions associated with the MC operation, such that the haptic control unit 112 can be used to perform the one or more functions, such as changing a setting for the vehicle cabin 100 or vehicle itself, as described herein.

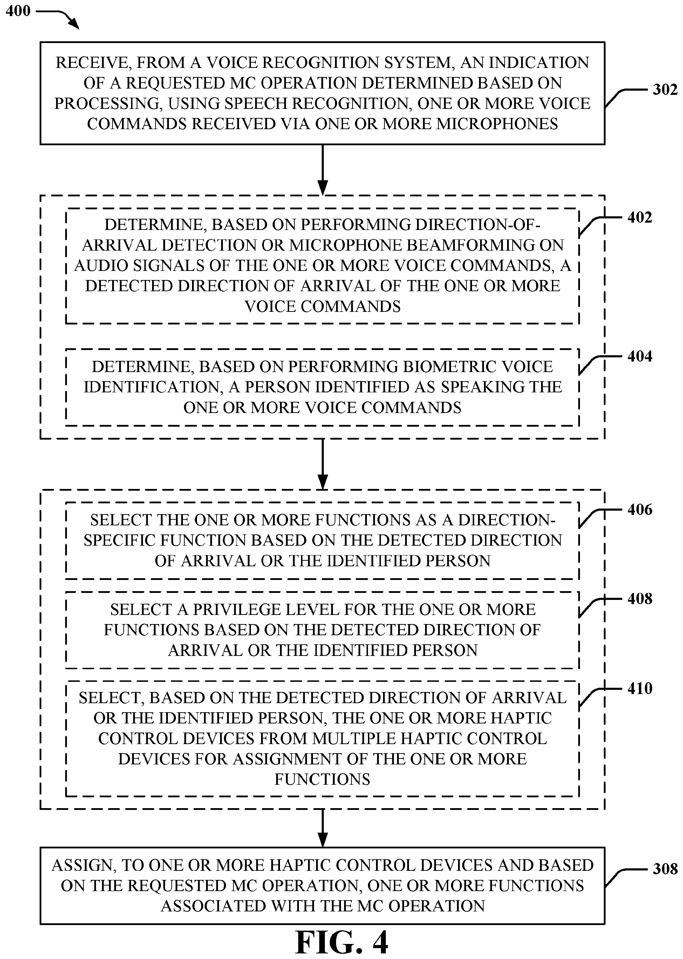

**FIG. 4** illustrates an example of a method 400 for assigning MC operations to a haptic control device based on voice direction or person identification, in accordance with aspects described herein. For example, method 400 can be performed by the VCHI 104, associated MC system 102, or corresponding components, as described in FIGs. 1 and 2.

In method 400, at action 302, an indication of a requested MC operation determined based on processing, using speech recognition, one or more voice commands received via one or more microphones can be received from a voice recognition system, as described in reference to method 300 in FIG. 3 above.

In method 400, at action 308, one or more functions associated with the MC operation can be assigned to the one or more haptic control devices based on the requested MC operation, as described in reference to method 300 in FIG. 3 above.

In method 400, optionally at action 402, a detected direction of arrival of one or more of the voice commands can be determined based on performing direction-of-arrival detection or microphone beamforming on audio signals of the one or more voice commands. In an aspect, direction detection unit 202, e.g., in accordance with VCHI 104, voice processing unit 106, one or more associated processors and/or memories, etc., can determine, based on performing direction-of-arrival detection or microphone beamforming on audio signals of the one or more voice commands, the detected direction of arrival of the one or more voice commands. For example, based on detecting the voice command, direction detection unit 202 can determine the direction of arrival, and may determine a zone associated with the direction of arrival, such as a front left seat 114, rear seat row 116, front right seat 118, etc. As described, the direction of arrival may be used to validate voice commands, determine a haptic control unit 112 to which to assign the MC operation, etc.

In method 400, optionally at action 404, a person identified as speaking the one or more voice commands can be determined based on performing biometric identification. In an aspect, voice identification unit 208, e.g., in accordance with VCHI 104, voice processing unit 106, one or more associated processors and/or memories, etc., can determine, based on performing biometric voice identification, the person identified as speaking the one or more voice commands. For example, the person can train the voice identification unit 208 to detect their voice based on speaking prompts thereto via microphone array 110. Voice identification unit 208 can identify the person in subsequent voice commands. As described, the identified person may be used to validate voice commands, determine a haptic control unit 112 to which to assign the MC operation, determine content for adjusting via the haptic control unit 112 (e.g., songs on a playlist associated with the person), etc.

In method 400, optionally at action 406, the one or more functions for assigning to the one or more haptic control devices can be selected as a direction-specific function based on the detected direction of arrival or the identified person. In an aspect, function control unit 206, e.g., in accordance with VCHI 104, voice processing unit 106, one or more associated processors and/or memories, etc., can select the one or more functions as a direction-specific function based on the detected direction of arrival or the identified person. For example, function control unit 206 can determine the direction-specific function as a function for a certain HVAC zone, a certain seat, etc. for adjusting by using the haptic control unit 112.

In method 400, optionally at action 408, a privilege level for the one or more functions can be selected based on the detected direction of arrival or the identified person. In an aspect, function control unit 206, e.g., in accordance with VCHI 104, voice processing unit 106, one or more associated processors and/or memories, etc., can select the privilege level for the one or more functions based on the detected direction of arrival or the identified person. In one example, function control unit 206 can determine, based on the privilege level, whether certain directions (e.g., zones) or identified persons are able to control certain functions via the haptic control unit 112, and can accordingly assign or not assign the MC operation to the haptic control unit 112.

In method 400, optionally at action 410, the one or more haptic control devices can be selected from multiple haptic control devices for assignment of the one or more functions based on the detected direction of arrival or the identified person. In an aspect, function control unit 206, e.g., in accordance with VCHI 104, voice processing unit 106, one or more associated processors and/or memories, etc., can select, based on the detected direction of arrival or the identified person, the one or more haptic control devices from multiple haptic control devices for assignment of the one or more functions. As described, for example, where the vehicle cabin 100 or MC system 102 thereof includes multiple haptic control units 112 assigned for multiple zones, function control unit 206 can select the haptic control unit 112 for assigning the function of the MC operation based on determining the zone or person from which the voice command is received.

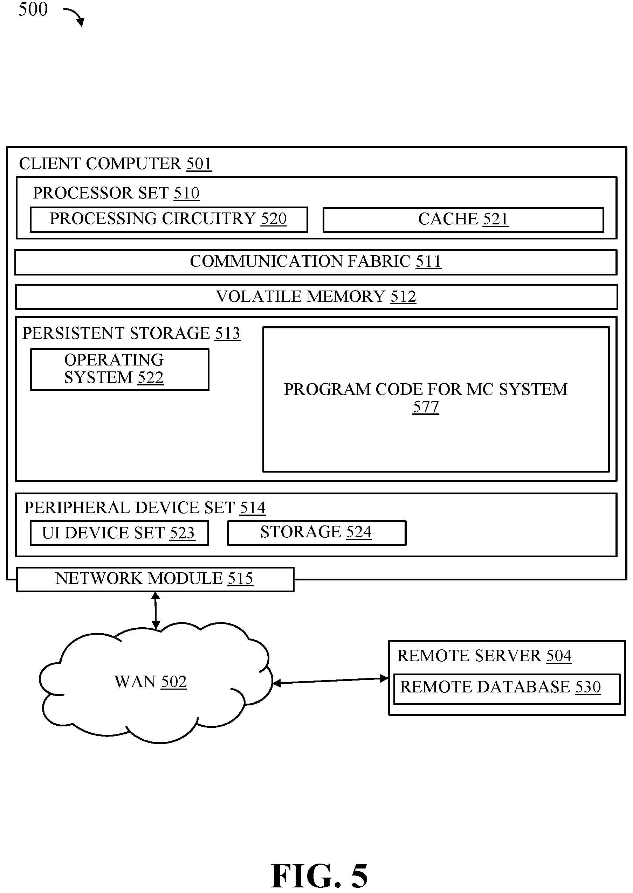

Referring to **FIG. 5**, an example of a computing environment 500 is shown, in accordance with an aspects described herein. Computing environment 500 may be an in-car computing system having a MC system 102, VCHI 104, voice processing unit 106, central control unit 122, touch screen display/HMI 108, actuator 120, haptic control unit 112, microphones 110, speakers, and/or other components as described.

Computing environment 500 includes an example of an environment including a client computer 501 configured for the execution of at least some of the program code 577 involved in performing the methods described herein relating to providing a MC system, associated VCHI, etc. The computing environment 500, in addition to computer code 577, can further include for example, client computer 501, wide area network (WAN) 502, remote server 504, cloud 506. In this aspect, computer 501 includes processor set 510 (including processing circuitry 520 and cache 521), communication fabric 511, volatile memory 512, persistent storage 513 (including operating system 522 and block 577, as identified above), peripheral device set 514 (including user interface (UI), device set 523, storage 524), and network module 515. Remote server 504 includes remote database 530.

Computer 501 may take the form of a computer or mobile device or MC now known or to be developed in the future that is capable of running a program, accessing a network or querying a database, such as remote database 530. Alternatively, performance of the computer-implemented method(s) described herein may be distributed among multiple computers and/or between multiple locations. For the sake of simplicity, in this presentation of computing environment 500, the following detailed discussion is focused on a single computer, specifically computer 501. Computer 501 may be located in a cloud, even though computer 501 is not shown in a cloud in **FIG. 5****.** On the other hand, computer 501 is not required to be in a cloud except to any extent as may be affirmatively indicated.

Processor set 510 includes one or more computer processors of any type. Processing circuitry 520 may be distributed over multiple packages, for example, multiple, coordinated integrated circuit chips. Processing circuitry 520 may implement multiple processor threads and/or multiple processor cores. Cache 521 is memory that is located in the processor chip package(s) and can be used for data or code that can be available for rapid access by the threads or cores running on processor set 510. Cache memories can be organized into multiple levels depending upon relative proximity to the processing circuitry. Alternatively, some, or all, of the cache for the processor set may be located "off chip." In some computing environments, processor set 510 may be designed for working with qubits and performing quantum computing.

Computer readable program instructions can be loaded onto computer 501 to cause a series of operational steps to be performed by processor set 510 of computer 501 and effect a computer-implemented method, such that the instructions thus executed may instantiate the methods specified in flowcharts and/or narrative descriptions of computer-implemented methods described herein. These computer readable program instructions can be stored in various types of computer readable storage media, such as cache 521 and the other storage media discussed below. The program instructions, and associated data, can be accessed by processor set 510 to control and direct performance of aspects described herein. In computing environment 500, at least some of the instructions for performing aspects described herein may be stored in block 577 in persistent storage 513.

Communication fabric 511 can be signal conduction paths that allow the various components of computer 501 to communicate with each other. This fabric can be made of switches and electrically conductive paths, such as the switches and electrically conductive paths that make up busses, bridges, physical input / output ports and the like. Other types of signal communication paths may be used, such as fiber optic communication paths and/or wireless communication paths.

Volatile memory 512 can be any type of volatile memory now known or to be developed in the future. Examples include dynamic type random access memory (RAM) or static type RAM. The volatile memory can be characterized by random access. In computer 501, the volatile memory 512 can be located in a single package and/or can be internal to computer 501, but, alternatively or additionally, the volatile memory may be distributed over multiple packages and/or located externally with respect to computer 501.

Persistent storage 513 can be a form of non-volatile storage for computers that is now known or to be developed in the future. The non-volatility of this storage relates to the stored data being maintained regardless of whether power is being supplied to computer 501 and/or directly to persistent storage 513. Persistent storage 513 may be a read only memory (ROM), but can be at least a portion of the persistent storage allows writing of data, deletion of data, and/or re-writing of data. Some example forms of persistent storage include magnetic disks and solid state storage devices. Operating system 522 may take several forms, such as various known proprietary operating systems or open source Portable Operating System Interface type operating systems that employ a kernel. The code included in block 577 can include at least some of the computer code involved in performing aspects described herein.

Peripheral device set 514 can include the set of peripheral devices of computer 501. Data communication connections between the peripheral devices and the other components of computer 501 may be implemented in various ways, such as Bluetooth connections, Near-Field Communication (NFC) connections, connections made by cables (such as universal serial bus (USB) type cables), insertion type connections (for example, secure digital (SD) card), connections made though local area communication networks and even connections made through wide area networks such as the internet. In various aspects, UI device set 523 may include components such as one or more of a display screen, speaker or speaker array, microphone or microphone array, wearable devices (such as goggles and smart watches), keyboard, mouse, printer, touchpad, virtual reality goggles, augmented reality goggles, mixed reality goggles, game controllers, a voice user interface (VUI), an automatic speech recognition system (ASR), a text-to-speech (TTS) system, cameras, and haptic devices. Storage 524 can include external storage, such as an external hard drive, or insertable storage, such as an SD card. Storage 524 may be persistent and/or volatile. In some aspects, storage 524 may take the form of a quantum computing storage device for storing data in the form of qubits. In aspects where computer 501 has a large amount of storage (for example, where computer 501 locally stores and manages a large database) then this storage may be provided by peripheral storage devices designed for storing very large amounts of data, such as a storage area network (SAN) that is shared by multiple, geographically distributed computers.

Network module 515 can include the collection of computer software, hardware, and firmware that allows computer 501 to communicate with other computers through WAN 502. Network module 515 may include hardware, such as modems or Wi-Fi signal transceivers, software for packetizing and/or de-packetizing data for communication network transmission, and/or web browser software for communicating data over the internet. In some aspects, network control functions and network forwarding functions of network module 515 are performed on the same physical hardware device. In other aspects (for example, aspects that utilize software-defined networking (SDN)), the control functions and the forwarding functions of network module 515 are performed on physically separate devices, such that the control functions manage several different network hardware devices. Computer readable program instructions for performing the inventive methods can be downloaded to computer 501 from an external computer or external storage device through a network adapter card or network interface included in network module 515.

WAN 502 is any wide area network (for example, the internet) capable of communicating computer data over non-local distances by any technology for communicating computer data, now known or to be developed in the future. In some aspects, the WAN may be replaced and/or supplemented by local area networks (LANs) designed to communicate data between devices located in a local area, such as a Wi-Fi network. The WAN and/or LANs typically include computer hardware such as copper transmission cables, optical transmission fibers, wireless transmission, routers, firewalls, switches, gateway computers and edge servers.

Remote server 504 is any computer system that serves at least some data and/or functionality to computer 501. Remote server 504 may be controlled and used by the same entity that operates computer 501. Remote server 504 represents the machine(s) that collect and store helpful and useful data for use by other computers, such as computer 501.

Various aspects of the disclosure may take the form of an entirely or partially hardware aspect, an entirely or partially software aspect, or a combination of software and hardware. Furthermore, as described herein, various aspects of the disclosure (e.g., systems and methods) may take the form of a computer program product comprising a computer-readable non-transitory storage medium having computer-accessible instructions (e.g., computer-readable and/or computer-executable instructions) such as computer software, encoded or otherwise embodied in such storage medium. Those instructions can be read or otherwise accessed and executed by one or more processors to perform or permit the performance of the operations described herein. The instructions can be provided in any suitable form, such as source code, compiled code, interpreted code, executable code, static code, dynamic code, assembler code, combinations of the foregoing, and the like. Any suitable computer-readable non-transitory storage medium may be utilized to form the computer program product. For instance, the computer-readable medium may include any tangible non-transitory medium for storing information in a form readable or otherwise accessible by one or more computers or processor(s) functionally coupled thereto. Non-transitory storage media can include read-only memory (ROM); random access memory (RAM); magnetic disk storage media; optical storage media; flash memory, and so forth.

Aspects of this disclosure are described herein with reference to block diagrams and flowchart illustrations of methods, systems, apparatuses, and computer program products. It can be understood that each block of the block diagrams and flowchart illustrations, and combinations of blocks in the block diagrams and flowchart illustrations, respectively, can be implemented by computer-accessible instructions. In certain implementations, the computer-accessible instructions may be loaded or otherwise incorporated into a general-purpose computer, a special-purpose computer, or another programmable information processing apparatus to produce a particular machine, such that the operations or functions specified in the flowchart block or blocks can be implemented in response to execution at the computer or processing apparatus.

Unless otherwise expressly stated, it is in no way intended that any device protocol, procedure, process, or method set forth herein be construed as requiring that its acts or steps be performed in a specific order. Accordingly, where a process or method claim does not actually recite an order to be followed by its acts or steps, or it is not otherwise specifically recited in the claims or descriptions of the subject disclosure that the steps are to be limited to a specific order, it is in no way intended that an order be inferred, in any respect. This holds for any possible non-express basis for interpretation, including: matters of logic with respect to the arrangement of steps or operational flow; plain meaning derived from grammatical organization or punctuation; the number or type of aspects described in the specification or annexed drawings; or the like.

As used in this disclosure, including the annexed drawings, the terms "component," "module," "system," and the like are intended to refer to a computer-related entity or an entity related to an apparatus with one or more specific functionalities. The entity can be either hardware, a combination of hardware and software, software, or software in execution. One or more of such entities are also referred to as "functional elements." As an example, a component can be a process running on a processor, a processor, an object, an executable, a thread of execution, a program, and/or a computer. For example, both an application running on a server or network controller, and the server or network controller can be a component. One or more components can reside within a process and/or thread of execution and a component can be localized on one computer and/or distributed between two or more computers. Also, these components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which parts can be controlled or otherwise operated by program code executed by a processor. As yet another example, a component can be an apparatus that provides specific functionality through electronic components without mechanical parts, the electronic components can include a processor to execute program code that provides, at least partially, the functionality of the electronic components. As still another example, interface(s) can include I/O components or Application Programming Interface (API) components. While the foregoing examples are directed to aspects of a component, the exemplified aspects or features also apply to a system, module, and similar.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in this specification and annexed drawings should be construed to mean "one or more" unless specified otherwise or clear from context to be directed to a singular form.

In addition, the terms "example" and "such as" and "e.g." are utilized herein to mean serving as an instance or illustration. Any aspect or design described herein as an "example" or referred to in connection with a "such as" clause or "e.g." is not necessarily to be construed as preferred or advantageous over other aspects or designs described herein. Rather, use of the terms "example" or "such as" or "e.g." is intended to present concepts in a concrete fashion. The terms "first," "second," "third," and so forth, as used in the claims and description, unless otherwise clear by context, is for clarity only and does not necessarily indicate or imply any order in time or space.

The term "processor," as utilized in this disclosure, can refer to any computing processing unit or device comprising processing circuitry that can operate on data and/or signaling. A computing processing unit or device can include, for example, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can include an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. In some cases, processors can exploit nano-scale architectures, such as molecular and quantum-dot based transistors, switches and gates, in order to optimize space usage or enhance performance of user equipment. A processor may also be implemented as a combination of computing processing units.

In addition, terms such as "store," "data store," data storage," "database," and substantially any other information storage component relevant to operation and functionality of a component, refer to "memory components," or entities embodied in a "memory" or components comprising the memory. It will be appreciated that the memory components described herein can be either volatile memory or nonvolatile memory, or can include both volatile and nonvolatile memory. Moreover, a memory component can be removable or affixed to a functional element (e.g., device, server).

Simply as an illustration, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

Various aspects described herein can be implemented as a method, apparatus, or article of manufacture using special programming as described herein. In addition, various of the aspects disclosed herein also can be implemented by means of program modules or other types of computer program instructions specially configured as described herein and stored in a memory device and executed individually or in combination by one or more processors, or other combination of hardware and software, or hardware and firmware. Such specially configured program modules or computer program instructions, as described herein, can be loaded onto a general-purpose computer, a special-purpose computer, or another type of programmable data processing apparatus to produce a machine, such that the instructions which execute on the computer or other programmable data processing apparatus create a means for implementing the functionality of disclosed herein.

The term "article of manufacture" as used herein is intended to encompass a computer program accessible from any non-transitory computer-readable device, carrier, or media. For example, computer readable media can include but are not limited to magnetic storage devices (e.g., hard drive disk, floppy disk, magnetic strips, or similar), optical discs (e.g., compact disc (CD), digital versatile disc (DVD), blu-ray disc (BD), or similar), smart cards, and flash memory devices (e.g., card, stick, key drive, or similar).

The detailed description set forth herein in connection with the annexed figures is intended as a description of various configurations or implementations and is not intended to represent the only configurations or implementations in which the concepts described herein may be practiced. The detailed description includes specific details for the purpose of providing a thorough understanding of various concepts. However, it will be apparent to those skilled in the art that these concepts may be practiced without these specific details or with variations of these specific details. In some instances, well-known components are shown in block diagram form, while some blocks may be representative of one or more well-known components.

The previous description of the disclosure is provided to enable a person skilled in the art to make or use the disclosure. Various modifications to the disclosure will be readily apparent to those skilled in the art, and the common principles defined herein may be applied to other variations without departing from the scope of the disclosure. Furthermore, although elements of the described aspects may be described or claimed in the singular, the plural is contemplated unless limitation to the singular is explicitly stated. Additionally, all or a portion of any aspect may be utilized with all or a portion of any other aspect, unless stated otherwise. Thus, the disclosure is not to be limited to the examples and designs described herein but is to be accorded the widest scope consistent with the principles and novel features disclosed herein. The invention is defined by the appended claims.

## Claims

1. A Voice-Controlled Haptic Interface, VCHI, for a machine control, MC, system, comprising:
one or more memories for storing instructions; and
one or more processors communicatively coupled with the one or more memories, wherein the one or more processors are, individually or in combination, configured to execute the instructions to cause the VCHI to:
receive, from a voice recognition system, an indication of a requested MC operation determined based on processing, using speech recognition, one or more voice commands received via one or more microphones;
identify a user associated with the one or more voice commands or detect a direction of arrival of the one or more voice commands;
select, based on the identified user or the detected direction of arrival of the one or more voice commands, a privilege level;
determine, based on the selected privilege level, whether to allow control of one or more control functions associated with the MC operation via one or more haptic control devices; and
assign, via the MC system and based on whether control of the one or more control functions associated with the requested MC operation via the one or more haptic control devices is allowed for the selected privilege level, the one or more control functions to the one or more haptic control devices.

2. The VCHI of claim 1, wherein the requested MC operation corresponds to a menu option in the MC system for modifying a parameter value of a setting in the MC system, wherein the one or more control functions are associated with using the one or more haptic control devices to modify the parameter value,
and optionally wherein the one or more processors are, individually or in combination, configured to execute the instructions to cause the VCHI to adjust, via the MC system, content on a display of the one or more haptic control devices to indicate the setting in the MC system.

3. The VCHI of any preceding claim, wherein the one or more processors are, individually or in combination, configured to execute the instructions to cause the VCHI to:
determine the detected direction of arrival of the one or more voice commands based on performing direction-of-arrival detection or microphone-beamforming on audio signals of the one or more voice commands.

4. The VCHI of any preceding claim, wherein the one or more processors are, individually or in combination, configured to execute the instructions to cause the VCHI to:
select the one or more control functions as a direction-specific control function based on the detected direction of arrival.

5. The VCHI of any preceding claim, wherein the one or more processors are, individually or in combination, configured to execute the instructions to cause the VCHI to:
select, based on the detected direction of arrival, the one or more haptic control devices from multiple haptic control devices for assignment of the one or more control functions.

6. The VCHI of any preceding claim, wherein the one or more processors are, individually or in combination, configured to execute the instructions to cause the VCHI to:
identify the user based on performing biometric voice identification.

7. The VCHI of any preceding claim, wherein the one or more processors are, individually or in combination, configured to execute the instructions to cause the VCHI to:
select the one or more control functions as a direction-specific control function based on the identified user.

8. The VCHI of any preceding claim, wherein the one or more processors are, individually or in combination, configured to execute the instructions to cause the VCHI to:
select, based on the identified user, the one or more haptic control devices from multiple haptic control devices for assignment of the one or more control functions.

9. The VCHI of any preceding claim, wherein at least one of the following applies:
(a) the one or more processors are, individually or in combination, configured to execute the instructions to cause the VCHI to translate the one or more voice commands from a first language to a second language to determine the requested MC operation;
(b) the VCHI, the MC system, the one or more microphones, and the one or more haptic control devices are coupled to one another within a vehicle, and wherein the MC system supports multiple MC operations related to operating one or more systems of the vehicle;
(c) the MC system includes the one or more microphones, and wherein the one or more processors are, individually or in combination, configured to execute the instructions to cause the VCHI to provide the voice recognition system to process, using speech recognition, the one or more voice commands received via the one or more microphones.

10. A method for assigning one or more control functions to one or more haptic control devices, comprising:
receiving, from a voice recognition system, an indication of a requested human machine interface, MC, operation determined based on processing, using speech recognition, one or more voice commands received via one or more microphones; and
identifying a user associated with the one or more voice commands or detecting a direction of arrival of the one or more voice commands;
selecting, based on the identified user or the detected direction of arrival of the one or more voice commands, a privilege level;
determining, based on the selected privilege level, whether to allow control of one or more control functions associated with the MC operation via one or more haptic control devices;
assigning, via a MC system and based on whether control of the one or more control functions associated with the requested MC operation via the one or more haptic control devices is allowed for the selected privilege level, the one or more control functions to the one or more haptic control devices.

11. The method of claim 10, wherein the requested MC operation corresponds to a menu option in the MC system for modifying a parameter value of a setting in the MC system, wherein the one or more control functions are associated with using the one or more haptic control devices to modify the parameter value,
wherein optionally the method further comprises adjusting, via the MC system, content on a display of the one or more haptic control devices to indicate the setting in the MC system.

12. The method of claim 10 or claim 11, further comprising providing the one or more voice commands to the voice recognition system to process, using speech recognition, the one or more voice commands received via the one or more microphones.

13. The method of any of claims 10 to 12, further comprising:
determining the detected direction of arrival of the one or more voice commands based on performing direction-of-arrival detection or microphone-beamforming on audio signals of the one or more voice commands; and optionally one or more of:
selecting the one or more control functions as a direction-specific control function based on the detected direction of arrival;
or
selecting, based on the detected direction of arrival, the one or more haptic control devices from multiple haptic control devices for assignment of the one or more control functions.

14. The method of any of claims 10 to 13, further comprising:
identifying the user based on performing biometric voice identification; and optionally one or more of:
selecting the one or more control functions as a direction-specific control function based on the identified user;
or
selecting, based on the identified user, the one or more haptic control devices from multiple haptic control devices for assignment of the one or more control functions.

15. One or more computer-readable media having instructions stored thereon, wherein the instructions are executable by one or more processors for assigning one or more control functions to one or more haptic control devices according to the method of any of claims 10 to 14.

## Patentansprüche

1. Sprachgesteuerte haptische Schnittstelle, VCHI, für ein Maschinensteuerungs-, MC-, System umfassend:
einen oder mehrere Speicher zum Speichern von Anweisungen; und
einen oder mehrere Prozessoren, die kommunikativ mit dem einen oder mehreren Speichern gekoppelt sind, wobei der eine oder die mehreren Prozessoren einzeln oder in Kombination konfiguriert sind, die Anweisungen auszuführen, um die VCHI zu Folgendem zu veranlassen:
Empfangen, von einem Spracherkennungssystem, einer Angabe eines angeforderten MC-Betriebs, der auf der Grundlage einer Verarbeitung, unter Verwendung von Spracherkennung, eines oder mehrerer über ein oder mehrere Mikrofone empfangener Sprachbefehle bestimmt wird;
Identifizieren eines Benutzers, der mit dem einen oder den mehreren Sprachbefehlen verknüpft ist, oder Erkennen einer Ankunftsrichtung des einen oder der mehreren Sprachbefehle;
Auswählen, auf der Grundlage des identifizierten Benutzers oder der erkannten Ankunftsrichtung des einen oder mehrerer Sprachbefehle, einer Berechtigungsstufe;
Bestimmen auf der Grundlage der ausgewählten Berechtigungsstufe, ob die Steuerung einer oder mehrerer mit dem MC-Betrieb verknüpfter Steuerfunktionen über eine oder mehrere haptische Steuervorrichtungen zu erlauben ist; und
Zuweisen der einen oder mehreren Steuerfunktionen zu der einen oder mehreren haptischen Steuervorrichtungen über das MC-System und auf der Grundlage davon, ob die Steuerung der einen oder der mehreren Steuerfunktionen, die mit dem angeforderten MC-Betrieb verknüpft sind, über die eine oder mehreren haptischen Steuervorrichtungen für die ausgewählte Berechtigungsstufe erlaubt ist.

2. VCHI nach Anspruch 1, wobei der angeforderte MC-Betrieb einer Menüoption in dem MC-System zum Ändern eines Parameterwerts einer Einstellung in dem MC-System entspricht, wobei die eine oder die mehreren Steuerfunktionen mit der Verwendung der einen oder der mehreren haptischen Steuervorrichtungen verknüpft sind, um den Parameterwert zu ändern,
und wobei der eine oder mehrere Prozessoren optional einzeln oder in Kombination konfiguriert sind, die Anweisungen auszuführen, um die VCHI zu veranlassen, über das MC-System Inhalt auf einer Anzeige der einen oder der mehreren haptischen Steuervorrichtungen anzupassen, um die Einstellung in dem MC-System anzugeben.

3. VCHI nach einem vorstehenden Anspruch, wobei der eine oder die mehreren Prozessoren einzeln oder in Kombination konfiguriert sind, um die Anweisungen auszuführen, um die VCHI zu Folgendem zu veranlassen:
die erkannte Ankunftsrichtung des einen oder mehrerer Sprachbefehle auf der Grundlage der Durchführung von Ankunftsrichtungserkennung oder Mikrofonstrahlbildung auf Audiosignalen des einen oder mehrerer Sprachbefehle zu bestimmen.

4. VCHI nach einem vorstehenden Anspruch, wobei der eine oder die mehreren Prozessoren einzeln oder in Kombination konfiguriert sind, um die Anweisungen auszuführen, um die VCHI zu Folgendem zu veranlassen:
Auswählen der einen oder mehreren Steuerfunktionen auf der Grundlage der erkannten Ankunftsrichtung als richtungsspezifische Steuerfunktion.

5. VCHI nach einem vorstehenden Anspruch, wobei der eine oder die mehreren Prozessoren einzeln oder in Kombination konfiguriert sind, um die Anweisungen auszuführen, um die VCHI zu Folgendem zu veranlassen:
Auswählen, auf der Grundlage der erkannten Ankunftsrichtung, der einen oder mehreren haptischen Steuervorrichtungen aus mehreren haptischen Steuervorrichtungen zum Zuweisen der einen oder mehreren Steuerfunktionen.

6. VCHI nach einem vorstehenden Anspruch, wobei der eine oder die mehreren Prozessoren einzeln oder in Kombination konfiguriert sind, um die Anweisungen auszuführen, um die VCHI zu Folgendem zu veranlassen:
den Benutzer auf der Grundlage einer biometrischen Sprachidentifizierung zu identifizieren.

7. VCHI nach einem vorstehenden Anspruch, wobei der eine oder die mehreren Prozessoren einzeln oder in Kombination konfiguriert sind, um die Anweisungen auszuführen, um die VCHI zu Folgendem zu veranlassen:
Auswählen der einen oder mehreren Steuerfunktionen auf der Grundlage des identifizierten Benutzers als richtungsspezifische Steuerfunktion.

8. VCHI nach einem vorstehenden Anspruch, wobei der eine oder die mehreren Prozessoren einzeln oder in Kombination konfiguriert sind, um die Anweisungen auszuführen, um die VCHI zu Folgendem zu veranlassen:
Auswählen, auf der Grundlage des identifizierten Benutzers, der einen oder der mehreren haptischen Steuervorrichtungen aus mehreren haptischen Steuervorrichtungen zum Zuweisen einer oder mehrerer Steuerfunktionen.

9. VCHI nach einem vorstehenden Anspruch, wobei mindestens eines von Folgendem zutrifft:
(a) der eine oder mehrere Prozessoren sind einzeln oder in Kombination konfiguriert, um die Anweisungen auszuführen, um die VCHI zu veranlassen, den einen oder mehrere Sprachbefehle von einer ersten Sprache in eine zweite Sprache zu übersetzen, um den angeforderten MC-Betrieb zu bestimmen;
(b) die VCHI, das MC-System, das eine oder die mehreren Mikrofone und die eine oder die mehreren haptischen Steuervorrichtungen sind innerhalb eines Fahrzeugs miteinander gekoppelt, und wobei das MC-System mehrere MC-Betriebe im Zusammenhang mit dem Betrieb eines oder mehrerer Systeme des Fahrzeugs unterstützt;
(c) das MC-System schließt das eine oder mehrere Mikrofone ein, und wobei der eine oder die mehreren Prozessoren einzeln oder in Kombination konfiguriert sind, um die Anweisungen auszuführen, um die VCHI zu veranlassen, das Spracherkennungssystem bereitzustellen, um unter Verwendung von Spracherkennung den einen oder die mehreren über das eine oder die mehreren Mikrofone empfangenen Sprachbefehle zu verarbeiten.

10. Verfahren zum Zuweisen einer oder mehrerer Steuerfunktionen zu einer oder mehreren haptischen Steuervorrichtungen, umfassend:
Empfangen von einem Spracherkennungssystem einer Angabe eines angeforderten Mensch-Maschine-Schnittstellen-, MC-, Betriebs, der auf der Grundlage der Verarbeitung, unter Verwendung von Spracherkennung, eines oder mehrerer über ein oder mehrere Mikrofone empfangener Sprachbefehle bestimmt wird; und
Identifizieren eines Benutzers, der mit dem einen oder den mehreren Sprachbefehlen verknüpft ist, oder Erkennen einer Ankunftsrichtung des einen oder der mehreren Sprachbefehle;
Auswählen einer Berechtigungsstufe auf der Grundlage des identifizierten Benutzers oder der erkannten Ankunftsrichtung des einen oder der mehreren Sprachbefehle;
Bestimmen auf der Grundlage der ausgewählten Berechtigungsstufe, ob die Steuerung einer oder mehrerer mit dem MC-Betrieb verknüpfter Steuerfunktionen über eine oder mehrere haptische Steuervorrichtungen zu erlauben ist;
Zuweisen der einen oder mehreren Steuerfunktionen zu der einen oder mehreren haptischen Steuervorrichtungen über ein MC-System und auf der Grundlage davon, ob die Steuerung der einen oder der mehreren Steuerfunktionen, die mit dem angeforderten MC-Betrieb verknüpft sind, über die eine oder die mehreren haptischen Steuervorrichtungen für die ausgewählte Berechtigungsstufe erlaubt ist.

11. Verfahren nach Anspruch 10, wobei der angeforderte MC-Betrieb einer Menüoption in dem MC-System zum Ändern eines Parameterwerts einer Einstellung in dem MC-System entspricht, wobei die eine oder die mehreren Steuerfunktionen mit der Verwendung der einen oder der mehreren haptischen Steuervorrichtungen verknüpft sind, um den Parameterwert zu ändern,
wobei das Verfahren optional weiter das Anpassen über das MC-System von Inhalt auf einer Anzeige der einen oder mehreren haptischen Steuervorrichtungen umfasst, um die Einstellung in dem MC-System anzugeben.

12. Verfahren nach Anspruch 10 oder Anspruch 11, weiter umfassend das Bereitstellen des einen oder mehrerer Sprachbefehle für das Spracherkennungssystem, um unter Verwendung der Spracherkennung den einen oder die mehreren über das eine oder die mehreren Mikrofone empfangenen Sprachbefehle zu verarbeiten.

13. Verfahren nach einem der Ansprüche 10 bis 12, weiter umfassend:
Bestimmen der erkannten Ankunftsrichtung des einen oder mehrerer Sprachbefehle auf der Grundlage der Durchführung einer Ankunftsrichtungserkennung oder Mikrofonstrahlbildung auf Audiosignalen des einen oder mehrerer Sprachbefehle; und optional eines oder mehrerer von:
Auswählen der einen oder der mehreren Steuerfunktionen auf der Grundlage der erkannten Ankunftsrichtung als richtungsspezifische Steuerfunktion;
oder
Auswählen auf der Grundlage der erkannten Ankunftsrichtung der einen oder der mehreren haptischen Steuervorrichtungen aus mehreren haptischen Steuervorrichtungen zum Zuweisen der einen oder der mehreren Steuerfunktionen.

14. Verfahren nach einem der Ansprüche 10 bis 13, weiter umfassend:
Identifizieren des Benutzers auf der Grundlage der Durchführung einer biometrischen Sprachidentifizierung; und optional eines oder mehrerer von:
Auswählen der einen oder der mehreren Steuerfunktionen auf der Grundlage des identifizierten Benutzers als richtungsspezifische Steuerfunktion;
oder
Auswählen auf der Grundlage des identifizierten Benutzers der einen oder der mehreren haptischen Steuervorrichtungen aus mehreren haptischen Steuervorrichtungen zum Zuweisen einer oder mehrerer Steuerfunktionen.

15. Ein oder mehrere computerlesbare Medien, die darauf gespeicherte Anweisungen aufweisen, wobei die Anweisungen von einem oder mehreren Prozessoren zum Zuweisen einer oder mehrerer Steuerfunktionen zu einer oder mehreren haptischen Steuervorrichtungen entsprechend dem Verfahren nach einem der Ansprüche 10 bis 14 ausführbar sind.

## Revendications

1. Interface haptique à commande vocale, VCHI, pour un système de commande de machine, MC, comprenant :
une ou plusieurs mémoires pour le stockage d'instructions ; et
un ou plusieurs processeurs couplés en communication avec les une ou plusieurs mémoires, dans laquelle les un ou plusieurs processeurs sont configurés, individuellement ou en combinaison, pour exécuter les instructions pour amener la VCHI à :
recevoir, à partir d'un système de reconnaissance vocale, une indication d'une opération MC demandée déterminée sur la base du traitement, en utilisant la reconnaissance vocale, d'une ou plusieurs commandes vocales reçues via un ou plusieurs microphones ;
identifier un utilisateur associé aux une ou plusieurs commandes vocales ou détecter une direction d'arrivée des une ou plusieurs commandes vocales ;
sélectionner, sur la base de l'utilisateur identifié ou de la direction d'arrivée détectée des une ou plusieurs commandes vocales, un niveau de privilège ;
déterminer, sur la base du niveau de privilège sélectionné, s'il faut autoriser la commande d'une ou plusieurs fonctions de commande associées à l'opération MC via un ou plusieurs dispositifs de commande haptique ; et
attribuer, via le système MC et sur la base du fait que la commande des une ou plusieurs fonctions de commande associées à l'opération MC demandée via les un ou plusieurs dispositifs de commande haptique est autorisée pour le niveau de privilège sélectionné, les une ou plusieurs fonctions de commande aux un ou plusieurs dispositifs de commande haptique.

2. VCHI selon la revendication 1, dans laquelle l'opération MC demandée correspond à une option de menu dans le système MC pour modifier une valeur de paramètre d'un réglage dans le système MC, dans laquelle les une ou plusieurs fonctions de commande sont associées à l'utilisation des un ou plusieurs dispositifs de commande haptiques pour modifier la valeur de paramètre,
et facultativement dans laquelle les un ou plusieurs processeurs sont, individuellement ou en combinaison, configurés pour exécuter les instructions pour amener la VCHI à ajuster, via le système MC, le contenu sur un affichage des un ou plusieurs dispositifs de commande haptique pour indiquer le réglage dans le système MC.

3. VCHI selon une quelconque revendication précédente, dans laquelle les un ou plusieurs processeurs sont, individuellement ou en combinaison, configurés pour exécuter les instructions pour amener la VCHI à :
déterminer la direction d'arrivée détectée des une ou plusieurs commandes vocales sur la base de la réalisation d'une détection de direction d'arrivée ou d'une formation de faisceau de microphone sur des signaux audio des une ou plusieurs commandes vocales.

4. VCHI selon une quelconque revendication précédente, dans laquelle les un ou plusieurs processeurs sont, individuellement ou en combinaison, configurés pour exécuter les instructions pour amener la VCHI à :
sélectionner une ou plusieurs fonctions de commande comme une fonction de commande spécifique à la direction, sur la base de la direction d'arrivée détectée.

5. VCHI selon une quelconque revendication précédente, dans laquelle les un ou plusieurs processeurs sont, individuellement ou en combinaison, configurés pour exécuter les instructions pour amener la VCHI à :
sélectionner, sur la base de la direction d'arrivée détectée, les un ou plusieurs dispositifs de commande haptique parmi de multiples dispositifs de commande haptique pour l'attribution des une ou plusieurs fonctions de commande.

6. VCHI selon une quelconque revendication précédente, dans laquelle les un ou plusieurs processeurs sont, individuellement ou en combinaison, configurés pour exécuter les instructions pour amener la VCHI à :
identifier l'utilisateur sur la base de la réalisation d'une identification vocale biométrique.

7. VCHI selon une quelconque revendication précédente, dans laquelle les un ou plusieurs processeurs sont, individuellement ou en combinaison, configurés pour exécuter les instructions pour amener la VCHI à :
sélectionner les une ou plusieurs fonctions de commande comme une fonction de commande spécifique à la direction sur la base de l'utilisateur identifié.

8. VCHI selon une quelconque revendication précédente, dans laquelle les un ou plusieurs processeurs sont, individuellement ou en combinaison, configurés pour exécuter les instructions pour amener la VCHI à :
sélectionner, sur la base de l'utilisateur identifié, les un ou plusieurs dispositifs de commande haptique parmi de multiples dispositifs de commande haptique pour l'attribution des une ou plusieurs fonctions de commande.

9. VCHI selon une quelconque revendication précédente, dans laquelle au moins l'un de ce qui suit s'applique :
(a) les un ou plusieurs processeurs sont, individuellement ou en combinaison, configurés pour exécuter les instructions pour amener la VCHI à traduire les une ou plusieurs commandes vocales d'une première langue dans une deuxième langue pour déterminer l'opération MC demandée ;
(b) la VCHI, le système MC, les un ou plusieurs microphones et les un ou plusieurs dispositifs de commande haptique sont couplés les uns aux autres à l'intérieur d'un véhicule, et dans laquelle le système MC prend en charge de multiples opérations MC liées au fonctionnement d'un ou plusieurs systèmes du véhicule ;
(c) le système MC inclut les un ou plusieurs microphones, et dans laquelle les un ou plusieurs processeurs sont, individuellement ou en combinaison, configurés pour exécuter les instructions pour amener la VCHI à fournir le système de reconnaissance vocale pour traiter, en utilisant la reconnaissance vocale, les une ou plusieurs commandes vocales reçues via les un ou plusieurs microphones.

10. Procédé d'attribution d'une ou plusieurs fonctions de commande à un ou plusieurs dispositifs de commande haptique, comprenant :
la réception, à partir d'un système de reconnaissance vocale, d'une indication d'une opération d'interface homme-machine, MC, demandée, déterminée sur la base du traitement, en utilisant la reconnaissance vocale, d'une ou plusieurs commandes vocales reçues via un ou plusieurs microphones ; et
l'identification d'un utilisateur associé aux une ou plusieurs commandes vocales ou la détection d'une direction d'arrivée des une ou plusieurs commandes vocales ;
la sélection, sur la base de l'utilisateur identifié ou de la direction d'arrivée détectée des une ou plusieurs commandes vocales, d'un niveau de privilège ;
la détermination, sur la base du niveau de privilège sélectionné, s'il faut autoriser la commande d'une ou plusieurs fonctions de commande associées à l'opération MC via un ou plusieurs dispositifs de commande haptique ;
l'attribution, via un système MC et sur la base du fait que la commande des une ou plusieurs fonctions de commande associées à l'opération MC demandée via les un ou plusieurs dispositifs de commande haptique est autorisée pour le niveau de privilège sélectionné, les une ou plusieurs fonctions de commande aux un ou plusieurs dispositifs de commande haptique.

11. Procédé selon la revendication 10, dans lequel l'opération MC demandée correspond à une option de menu dans le système MC pour modifier une valeur de paramètre d'un réglage dans le système MC, dans lequel les une ou plusieurs fonctions de commande sont associées à l'utilisation des un ou plusieurs dispositifs de commande haptiques pour modifier la valeur de paramètre,
dans lequel le procédé comprend en outre facultativement l'ajustement, via le système MC, d'un contenu sur un dispositif d'affichage des un ou plusieurs dispositifs de commande haptique pour indiquer le réglage dans le système MC.

12. Procédé selon la revendication 10 ou la revendication 11, comprenant en outre la fourniture des une ou plusieurs commandes vocales au système de reconnaissance vocale pour traiter, en utilisant la reconnaissance vocale, les une ou plusieurs commandes vocales reçues via les un ou plusieurs microphones.

13. Procédé selon l'une quelconque des revendications 10 à 12, comprenant en outre :
la détermination de la direction d'arrivée détectée des une ou plusieurs commandes vocales sur la base de la réalisation d'une détection de direction d'arrivée ou d'une formation de faisceau de microphone sur des signaux audio des une ou plusieurs commandes vocales ; et facultativement une ou plusieurs parmi :
la sélection des une ou plusieurs fonctions de commande comme une fonction de commande spécifique à la direction, sur la base de la direction d'arrivée détectée ;
ou
la sélection, sur la base de la direction d'arrivée détectée, des un ou plusieurs dispositifs de commande haptique parmi de multiples dispositifs de commande haptique pour l'attribution des une ou plusieurs fonctions de commande.

14. Procédé selon l'une quelconque des revendications 10 à 13, comprenant en outre :
l'identification de l'utilisateur sur la base de la réalisation d'une identification vocale biométrique ; et facultativement une ou plusieurs parmi :
la sélection des une ou plusieurs fonctions de commande comme une fonction de commande spécifique à la direction sur la base de l'utilisateur identifié ;
ou
la sélection, sur la base de l'utilisateur identifié, des un ou plusieurs dispositifs de commande haptique parmi de multiples dispositifs de commande haptique pour l'attribution des une ou plusieurs fonctions de commande.

15. Un ou plusieurs supports lisibles par ordinateur présentant des instructions stockées dessus, dans lesquels les instructions sont exécutables par un ou plusieurs processeurs pour attribuer une ou plusieurs fonctions de commande à un ou plusieurs dispositifs de commande haptique conformément au procédé selon l'une quelconque des revendications 10 à 14.
